# EUROPÄISCHE PATENTSCHRIFT

(11) **EP 2 844 503 B1**
(45) Veröffentlichungstag und Bekanntmachung des Hinweises auf die Patenterteilung: **08.06.2016**
(21) Anmeldenummer: 13719451.0
(22) Anmeldetag: 19.04.2013
(51) Int. Cl.: B60C 11/12, B60C 11/04

(54) **LAUFSTREIFENPROFIL EINES FAHRZEUGREIFENS**
RUNNING STRIP PROFILE OF A VEHICLE TYRE
PROFIL DE BANDE DE ROULEMENT D'UN PNEU DE VÉHICULE

(30) Priorität: 04.05.2012 DE 102012103944
(43) Veröffentlichungstag der Anmeldung: 11.03.2015
(73) Patentinhaber: Continental Reifen Deutschland GmbH, 30165 Hannover (DE)
(72) Erfinder: WÜST, Alexander, 30926 Seelze (DE); FERNANDEZ, Tomas, 30177 Hannover (DE); GONCALVES ANKIEWICZ, Amélia, Olga, 30559 Hannover (DE); RITTWEGER, Stefan, 30163 Hannover (DE); DOBCZYK, Klaudia, 30419 Hannover (DE); BUCHINGER, Thomas, 30974 Wennigsen (DE); POKUTTA-PASKALEVA, Anastassia, 30306 Atlanta (US)
(74) Vertreter: Finger, Karsten
(86) Internationale Anmeldenummer: PCT/EP2013/058160
(87) Internationale Veröffentlichungsnummer: WO 2013/164205

(56) Entgegenhaltungen:
- WO-A1-2009/077808
- JP-A- 2000 025 419

## Beschreibung

Die Erfindung betrifft ein Laufstreifenprofil eines Fahrzeugreifens mit Profilpositiven wie Profilblöcken oder Laufstreifenbändern, welche Feineinschnitte aufweisen, wobei die Feineinschnitte in Aufsicht eine etwa Ω-förmige Geometrie aufweisen:
- mit zwei in etwa in axialer Richtung angeordneten axialen Abschnitten, welche auf einer gemeinsamen, gedachten Geraden mit einem Abstand a zueinander angeordnet sind,
- mit einer zwischen diesen axialen Abschnitten angeordneten mittigen Vorwölbung, wobei die Vorwölbung eine in axialer Richtung gemessene maximale Ausdehnung b aufweist,
- wobei a < b ist, so dass Hinterschneidungen gebildet sind und
- wobei die maximale Erstreckung der Vorwölbung in Umfangsrichtung gemessen, über den Tiefenverlauf des Feineinschnittes kontinuierlich verringert ist.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Bei PKW-Reifen sind die Feineinschnitte bei Fahrzeugreifen für den Einsatz unter winterlichen Fahrbedingungen ausgebildet und dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Ein Laufstreifenprofil gemäß dem Oberbegriff ist aus der WO 2009/077808 A1 bekannt. Weiterhin hat die DE 100 49 936 B4 ein Laufstreifenprofil zum Gegenstand, welches aus Profilblöcken besteht. Die Profilblöcke weisen Feineinschnitte mit Ω-förmiger bzw. puzzleteilartiger Geometrie auf. Eine derartige Ausbildung der Feineinschnitte bewirkt eine Verschränkung und somit Versteifung der Profilblöcke bzw. -bänder in allen Richtungen. Die Verschränkung ist durch gegenseitige Abstützeffekte insbesondere durch die Vorwölbung von gegenüberliegenden Feineinschnittswänden erhalten. Aus der JP 2000 025419 A sind ebenfalls Ω-förmige Feineinschnitte bekannt.

Diese Verschränkung ist insbesondere im Neuzustand des Laufstreifenprofils von Vorteil, da die Profiltiefe hoch ist und eine hohe Beweglichkeit der durch die Feineinschnitte gebildeten Profilabschnitte gegeben ist. Die Verschränkung führt zu einer vorteilhaften Versteifung des Profilblockes oder -bandes in allen Richtungen.

Im angefahrenen Zustand des Laufstreifenprofils sind die Profilblöcke bzw. -bänder durch die geringere verbleibende Profiltiefe von sich aus bereits steifer als im Neuzustand. Eine weitere Versteifung durch Verschränkung ist dann unvorteilhaft.

Es ist die Aufgabe der Erfindung, ein Laufstreifenprofil eines Fahrzeugreifens zur Verfügung zu stellen, das über seine Lebensdauer ein gutes Handling und Trockenbremseigenschaften als auch eine gute Nassperformance aufweist.

Gelöst wird die Aufgabe, indem die Erstreckung der Vorwölbung zum Feineinschnittgrund hin derart verringert ist, dass der Feineinschnitt im Feineinschnittgrund in einer Gerade endet.

Es ist erfindungsgemäß ein Laufstreifenprofil geschaffen, das im Neuzustand-in Aufsicht auf einen Feineinschnitt- durch eine etwa Ω-förmige Geometrie des Feineinschnittes Verschränkungseffekte in allen Richtungen zwischen benachbarten Profilblock- oder - bandabschnitten bewirkt. Die Ω-förmige Geometrie kann gleichfalls als pilzartige Geometrie beschrieben werden. Durch die Verschränkungseffekte in allen Richtungen ist eine optimale Steifigkeit der Profilelemente erhalten.

Im Tiefenverlauf weist der Feineinschnitt eine vom Neuzustand abweichende Geometrie auf, indem sich die maximale Erstreckung der Vorwölbung - in Umfangsrichtung gemessen - kontinuierlich verringert und in einer Geraden endet. Dieses wird durch eine Verringerung der Erstreckung der Vorwölbung in Umfangsrichtung erreicht, wodurch eine kontinuierlich verringerte Verschränkung und somit eine kontinuierlich verringerte Versteifung der Profilelemente erhalten ist.

Das Laufstreifenprofil ist mit dieser Maßnahme stufenlos an die höhere Steifigkeit des angefahrenen Laufstreifenprofils angepasst.

Es ist ein Laufstreifenprofil mit einem sogenannten "3D-Feineinschnitt" geschaffen, das über dessen Lebensdauer ein gutes Handling, gute Trockenbremseigenschaften als auch eine gute Nassperformance aufweist.

"Axiale Richtung" meint die Richtung entlang der Reifenachse.

"Umfangsrichtung" meint die Richtung entlang des Reifenabrollens.

"Radiale Richtung" meint die Richtung vom Reifenmittelpunkt zum Laufstreifen.

"Feineinschnittgrund" meint die Linie eines Feineinschnitts der dem Reifenmittelpunkt am nächsten ist.

"Breite des Feineinschnittes" meint die Ausdehnung eines Feineinschnittes quer zu seiner Längserstreckung.

"Profiltiefe" oder "Feineinschnitttiefe" meint die maximale Differenz in radialer Richtung zwischen Elementen eines Profils bzw. eines Feineinschnittes.

Zweckmäßig ist es, wenn der Winkel, welcher, im Querschnitt des Feineinschnittes betrachtet, durch die beiden in Umfangsrichtung am weitesten entfernten Punkte des Feineinschnittes über dessen Tiefenverlauf gebildet wird, maximal 20° beträgt.

Vorteilhaft ist es, wenn die axialen Abschnitte einen Tiefenverlauf in radialer Richtung aufweisen, während die Vorwölbung einen von der radialen Richtung abweichenden Tiefenverlauf aufweist.

In einer anderen Ausführungsform der Erfindung weisen beide, die axialen Abschnitte und die Vorwölbung einen von der radialen Richtung abweichenden Tiefenverlauf auf.

Zweckmäßig ist es, wenn, in Aufsicht auf den Feineinschnitt, dessen Richtungsänderungen durch Radien gebildet sind.

Vorteilhaft ist es, wenn der Feineinschnitt im Feineinschnittgrund eine Breite von 0,5 mm bis 3,0 mm, vorzugsweise von etwa 0,8 mm aufweist.

Ein derartiges Laufstreifenprofil ist in einem Fahrzeugreifen, vorzugsweise einen Nutzfahrzeugreifen oder einem PKW-Reifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Ansicht eines Laufstreifenprofils eines Fahrzeugreifens mit Feineinschnitten in den Profilbändern;
Fig. 2 eine dreidimensionale Darstellung eines Feineinschnittes des Laufstreifenprofils;
Fig. 3 einen Querschnitt des Feineinschnittes der Fig. 2;
Fig. 4 einen Querschnitt eines weiteren Feineinschnittes.

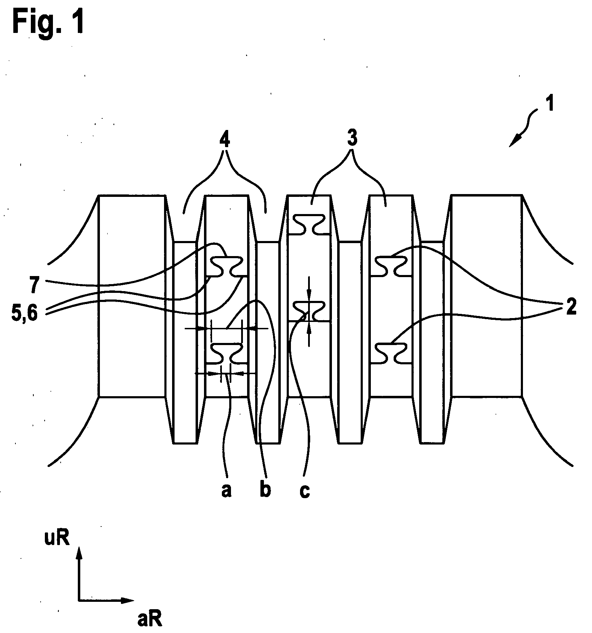

Die **Fig. 1** zeigt eine dreidimensionale Ansicht eines Laufstreifenprofils 1 eines Fahrzeugreifens mit Feineinschnitten 2 in den Profilbändern 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 weist - in Aufsicht - eine etwa Ω-förmige bzw. pilzartige Geometrie aus zwei in etwa in axialer Richtung aR auf einer gemeinsamen gedachten Geraden angeordneten, mit einem Abstand a voneinander beabstandeten axialen Abschnitten 5, 6 und einer zwischen diesen Abschnitten 5, 6 angeordneten, in etwa in Umfangsrichtung uR ausgerichteten mittigen Vorwölbung 7 mit einer in axialer Richtung aR gemessenen maximalen Ausdehnung b auf, wobei a < b. Die Vorwölbung 7 weist eine maximale Erstreckung c in Umfangsrichtung uR auf. In Aufsicht auf den Feineinschnitt 2 sind alle Richtungsänderungen im Feineinschnittverlauf durch Radien gebildet.

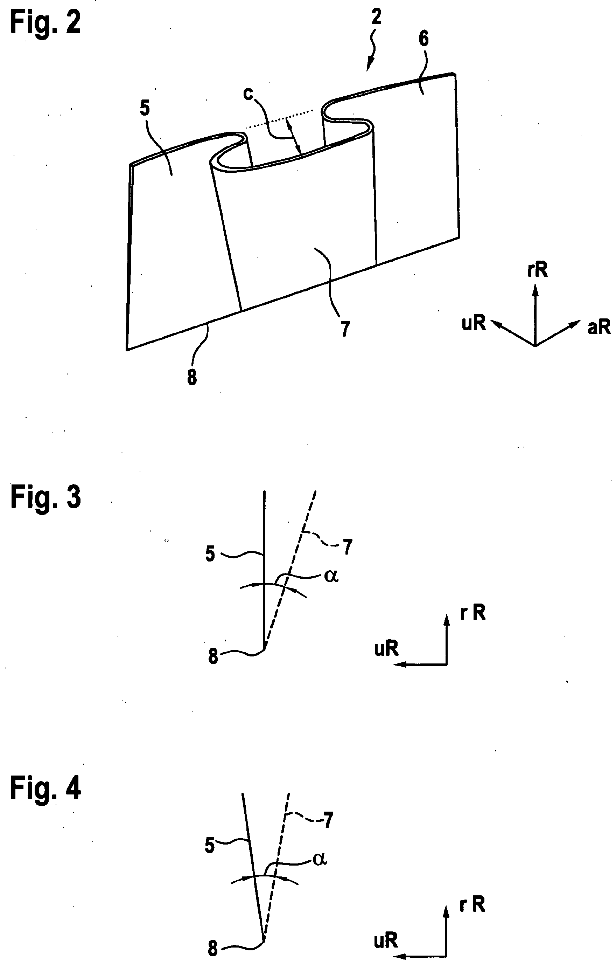

Die **Fig. 2** zeigt eine dreidimensionale Darstellung eines Feineinschnittes 2 des Laufstreifenprofils 1 der Fig. 1. Der Feineinschnitt 2 hat im Neuzustand die in Fig. 1 beschriebene Geometrie. Über den Tiefenverlauf des Feineinschnittes 2 verringert sich die maximale Erstreckung der Vorwölbung c - in Umfangsrichtung gemessen -, derart, dass der Feineinschnitt 2 im Feineinschnittgrund 8 in einer in etwa axial verlaufenden Geraden endet.

Die **Fig. 3** zeigt einen Querschnitt des Feineinschnittes der Fig. 2. Die durchgezogene Linie zeigt den Tiefenverlauf eines axialen Abschnittes 5, während die feinpunktierte Linie den Tiefenverlauf des am weitesten entfernten Punktes der Vorwölbung 7 zeigt. Der Tiefenverlauf, der durch die beiden in Umfangsrichtung am weitesten entfernten Punkte des Feineinschnittes 2 über dessen Tiefenverlauf gebildet wird, ist V-förmig, mit zwei als Gerade ausgebildeten Schenkeln des V's. Die axialen Abschnitte 5 weisen einen Tiefenverlauf in radialer Richtung auf, während die Vorwölbung 7 einen von der radialen Richtung abweichenden Tiefenverlauf aufweist. Der Winkel α, welcher von beiden Schenkeln des V's eingeschlossen wird, beträgt maximal 20°, hier 5°.

Die **Fig. 4** zeigt einen Querschnitt eines weiteren Feineinschnittes 2. Der Querschnitt unterscheidet sich von dem Querschnitt der Fig. 3 darin, dass die axialen Abschnitte 5 sowie die Vorwölbung 7 einen von der radialen Richtung abweichenden Tiefenverlauf aufweisen.. Der Winkel α, welcher von beiden Schenkeln des V's eingeschlossen wird, beträgt maximal 20°, hier 5°.

### Bezugszeichenliste

### (Teil der Beschreibung)

- 1: Laufstreifenprofil
- 2: Feineinschnitt
- 3: Profilband
- 4: Umfangsrille
- 5: axialer Abschnitt
- 6: axialer Abschnitt
- 7: Vorwölbung
- 8: Feineinschnittgrund

- a: axialer Abstand zwischen den Abschnitten
- b: maximale Ausdehnung der Vorwölbung in axialer Richtung
- c: maximale Erstreckung der Vorwölbung in Umfangsrichtung
- rR: radiale Richtung
- aR: axiale Richtung
- uR: Umfangsrichtung

## Patentansprüche

1. Laufstreifenprofil (1) eines Fahrzeugreifens mit Profilpositiven wie Profilblöcken oder Laufstreifenbändern (3), welche Feineinschnitte (2) aufweisen, wobei die Feineinschnitte (2) in Aufsicht eine etwa Ω-förmige Geometrie aufweisen:
- mit zwei in etwa in axialer Richtung angeordneten axialen Abschnitten (5,6), welche auf einer gemeinsamen, gedachten Geraden mit einem Abstand (a) zueinander angeordnet sind,
- mit einer zwischen diesen axialen Abschnitten (5, 6) angeordneten mittigen Vorwölbung (7), wobei die Vorwölbung (7) eine in axialer Richtung gemessene maximale Ausdehnung (b) aufweist,
- wobei a < b ist, so dass Hinterschneidungen (10) gebildet sind und
- wobei die maximale Erstreckung der Vorwölbung (c) in Umfangsrichtung gemessen, über den Tiefenverlauf des Feineinschnittes (2) kontinuierlich verringert ist, **dadurch gekennzeichnet, dass**
die Erstreckung der Vorwölbung (c) zum Feineinschnittgrund (8) hin derart verringert ist, dass der Feineinschnitt (2) im Feineinschnittgrund (8) in einer Gerade endet.

2. Laufstreifenprofil nach Anspruch 1,
**dadurch gekennzeichnet, dass** der Winkel α, welcher, im Querschnitt des Feineinschnittes betrachtet, durch die beiden in Umfangsrichtung am weitesten entfernten Punkte des Feineinschnittes (2) über dessen Tiefenverlauf gebildet wird, maximal 20° beträgt.

3. Laufstreifenprofil nach Anspruch 2, **dadurch gekennzeichnet, dass** die axialen Abschnitte (5, 6) einen Tiefenverlauf in radialer Richtung aufweisen, während die Vorwölbung (7) einen von der radialen Richtung abweichenden Tiefenverlauf aufweist.

4. Laufstreifenprofil nach Anspruch 1 oder 2, **dadurch gekennzeichnet, dass** die axialen Abschnitte (5, 6) und die Vorwölbung (7) einen von der radialen Richtung abweichenden Tiefenverlauf aufweisen.

5. Laufstreifenprofil nach einem oder mehreren der vorangehenden Ansprüche, **dadurch gekennzeichnet, dass**, in Aufsicht auf den Feineinschnitt (2), dessen Richtungsänderungen im Feineinschnittverlauf durch Radien gebildet sind.

6. Laufstreifenprofil nach einem oder mehreren der vorangehenden Ansprüche, **dadurch gekennzeichnet, dass** der Feineinschnitt (2) im Feineinschnittgrund (8) eine Breite von 0,5 mm bis 3,0 mm, vorzugsweise von etwa 0,8 mm aufweist.

7. Fahrzeugluftreifen, **dadurch gekennzeichnet, dass** dieser ein Laufstreifenprofil (1) gemäß eines oder mehrerer der vorangehenden Ansprüche aufweist.

8. Fahrzeugluftreifen nach Anspruch 7, **dadurch gekennzeichnet dass** dieser ein Nutzfahrzeugreifen oder ein PKW-Reifen ist.

## Claims

1. Tread profile (1) of a vehicle tire, having profile positives such as profile blocks or tread bands (3) that have sipes (2), wherein the sipes (2) have an approximately Ω-shaped geometry in plan view:
- having two axial sections (5, 6) which are arranged approximately in an axial direction and which are arranged on a common, imaginary straight line with a spacing (a) to one another,
- having a central bulge (7) arranged between said axial sections (5, 6), wherein the bulge (7) has a maximum extent (b) measured in the axial direction,
- wherein a < b, such that undercuts (10) are formed, and
- wherein the maximum extent of the bulge (c) measured in the circumferential direction decreases continuously over the depth profile of the sipe (2), **characterized in that**
the extent of the bulge (c) decreases towards the sipe base (8) such that the sipe (2) ends in a straight line at the sipe base (8).

2. Tread profile according to Claim 1,
**characterized in that** the angle α formed, as viewed in the cross section of the sipe, over the depth profile of the sipe (2) by those two points of said sipe which are furthest apart in the circumferential direction is at most 20°.

3. Tread profile according to Claim 2, **characterized in that** the axial sections (5, 6) have a depth profile in a radial direction, whereas the bulge (7) has a depth profile that deviates from the radial direction.

4. Tread profile according to Claim 1 or 2, **characterized in that** the axial sections (5, 6) and the bulge (7) have a depth profile that deviates from the radial direction.

5. Tread profile according to one or more of the preceding claims, **characterized in that**, in a plan view of the sipe (2), the directional changes thereof are formed by radii in the sipe profile.

6. Tread profile according to one or more of the preceding claims, **characterized in that** the sipe (2) has a width of 0.5 mm to 3.0 mm, preferably of approximately 0.8 mm, at the sipe base (8).

7. Vehicle pneumatic tire, **characterized in that** said vehicle pneumatic tire has a tread profile (1) according to one or more of the preceding claims.

8. Vehicle pneumatic tire according to Claim 7, **characterized in that** it is a utility vehicle tire or a passenger motor vehicle tire.

## Revendications

1. Profil de bande de roulement (1) d'un pneu de véhicule avec des profilés positifs tels que des blocs profilés ou des bandes (3) de la bande de roulement, qui présentent de fines entailles (2), les fines entailles (2) présentant, en vue de dessus, une géométrie approximativement en forme de Ω :
- avec deux portions axiales (5, 6) disposées approximativement dans la direction axiale, qui sont disposées sur une droite imaginaire commune à une distance (a) l'une de l'autre,
- avec un précintrage (7) central disposé entre ces portions axiales (5, 6), le précintrage (7) présentant une dimension maximale (b) mesurée dans la direction axiale,
- a étant inférieure à b, de telle sorte que des contre-dépouilles (10) soient formées et
- l'étendue maximale du précintrage (c), mesuré dans la direction périphérique, se rétrécissant en continu sur toute l'étendue en profondeur de la fine entaille (2) **caractérisé en ce que**
l'étendue du précintrage (c) jusqu'au fond de la fine entaille (8) se rétrécit de telle sorte que la fine entaille (2) se termine par une droite au fond de la fine entaille (8).

2. Profil de bande de roulement selon la revendication 1,
**caractérisé en ce que** l'angle α qui, considéré dans la section transversale de la fine entaille, est formé par les deux points de la fine entaille (2) les plus éloignés dans la direction périphérique sur son étendue en profondeur, est au maximum de 20°.

3. Profil de bande de roulement selon la revendication 2, **caractérisé en ce que** les portions axiales (5, 6) présentent une étendue en profondeur dans la direction radiale tandis que le précintrage (7) présente une étendue en profondeur s'écartant de la direction radiale.

4. Profil de bande de roulement selon la revendication 1 ou 2, **caractérisé en ce que** les portions axiales (5, 6) et le précintrage (7) présentent une étendue en profondeur s'écartant de la direction radiale.

5. Profil de bande de roulement selon l'une quelconque ou plusieurs des revendications précédentes, **caractérisé en ce que**, vu de dessus sur la fine entaille (2), ses variations de direction dans l'étendue de la fine entaille sont formées par des rayons.

6. Profil de bande de roulement selon l'une quelconque ou plusieurs des revendications précédentes, **caractérisé en ce que** la fine entaille (2) présente au fond de la fine entaille (8) une largeur de 0,5 mm à 3,0 mm, de préférence d'environ 0,8 mm.

7. Pneumatique de véhicule, **caractérisé en ce que** celui-ci présente un profil de bande de roulement (1) selon l'une quelconque ou plusieurs des revendications précédentes.

8. Pneumatique de véhicule selon la revendication 7, **caractérisé en ce que** celui-ci est un pneu de véhicule utilitaire ou un pneu de véhicule poids-lourd.
